# EUROPEAN PATENT SPECIFICATION

(11) **EP 3 195 712 B1**
(45) Date of publication and mention of the grant of the patent: **14.11.2018**
(21) Application number: 17151753.5
(22) Date of filing: 17.01.2017
(51) Int. Cl.: A01C 11/02

(54) **AN IMPROVED TRANSPLANTER MACHINE FOR SEEDLINGS ROOTED IN SODS**
EINE VERBESSERTE TRANSPLANTERMASCHINE FÜR SETZLINGE MIT WURZELBALLEN
UNE MACHINE DE TRANSPLANTER AMÉLIORÉE POUR LES PLANTULES ENRACINÉES DANS UNE MOTTE

(30) Priority: 19.01.2016 IT UB20160297
(43) Date of publication of application: 26.07.2017
(73) Proprietor: Ferrari Costruzioni Meccaniche S.r.l., 46040 Guidizzolo (MN) (IT)
(72) Inventor: FERRARI, Dario, 46040 Guidizzolo (MN) (IT); VINCO, Giuseppe, 46046 Medole (MN) (IT)
(74) Representative: Mari, Marco Giovanni

(56) References cited:
- EP-A1- 0 062 917
- EP-A1- 1 785 024
- WO-A1-2014/146545
- DE-B1- 2 309 879
- NL-A- 7 806 949

## Description

The present invention relates to an improved transplanter machine for seedlings rooted in sods.

As is known, transplanter machines are used to rapidly transplant seedlings, vegetables, etc., which are first grown in small sods of soil in blocks. The seedlings are supplied still rooted in the sods and must be transplanted into the bare ground, one by one.

In general terms, a transplanter machine is provided with a series of conveyor belts housing the seedlings in blocks and acting as storage reservoir, the same in number as the rows to be transplanted in that given space; a plurality of ploughshares, or equivalent means for each creating a furrow in the ground; and a series of devices for distribution, separation and placing of the single sods in the furrow, the same in number as the transplant units. Naturally, these operations must be performed extremely rapidly, but with a certain precision and without damaging the seedlings; in particular, correct positioning of the seedling in the furrow is very important for its rooting and growth.

The patent EP 596 841 by the same applicant discloses a transplanter machine of this kind. It describes a distributer provided with a system for picking up the sods in blocks through two rotors, which are mounted elastically at the sides of the end section of the feed belt, and cooperate with a pinching member formed by two movable walls, located at the sides of the belt and provided with a pneumatic drive.

The rotors are moved intermittently by an electronically controlled hydraulic motor, and are provided with appropriate transverse tabs to increase their grasping capacity. In substance, the aforesaid rotors have the task of grasping the single sod of soil (with related seedling) that appears at the outlet of the feed belt, and of positioning it in the furrow, while the gripping member keeps the remaining seedlings accumulated on the belt stationary.

This type of distributor has some limits and drawbacks, in particular due to the footprint of the gripping system, which requires a furrow of significant dimensions to be made in the ground, at least equal to the sum of the diameter of the two rotors and of the width of the sod, making it difficult to close the furrow, once the sods have been set down.

This drawback is more serious when the ground is particularly wet and damp: in fact, in this case it is necessary to try to disturb as little soil as possible. Moreover, if the ground is wet making it impossible to operate using conventional transplanter machines, this causes a delay in setting down the sods, during which the seedlings continue to grow and the leaves of seedlings in adjacent sods become entangled: during the step of tearing the sod to be set down from the row arranged on the feed belt, there is the risk of the rotors also partly pulling on the adjacent plant, causing it to tilt and jeopardizing the work of the rotors in the subsequent pick-up step.

A further problem that can occur with the use of intermittently operating rotors, above all in conditions in which the surfaces thereof tend to become soiled, consists in the fact that it is difficult to ensure perfectly vertical placing of the seedlings, and consequently the bottom of the sod fails to adhere correctly to the bottom of the furrow, which can cause the presence of residual air under the roots making rooting more difficult.

In general, prior art transplanter machines either reach optimal operating speeds, as in the case of the machine described in the aforesaid document, by opening a wide furrow - and in the case of long and entangled leaves tend to operate with lack of precision in the set-down distance, at times causing the seedling to topple forward as a result of dragging - or solve the aforesaid problems with technical solutions that penalize hourly output.

Document EP 1 785 024 discloses a transplanter machine for seedlings rooted in sods, comprising:
- a perimeter frame;
- means for resting and advancing on the ground in a direction of travel;
- at least one distribution and placing line for said sods;
- an electronic control unit;
wherein said at least one distribution and placing line comprises:
- a secondary frame;
- a feed belt, having a main direction of longitudinal extension, to feed a column of sods in blocks, the base of which is adapted to rest on said belt;
- retaining means, adapted to temporarily block said column of sods along said feed belt, comprising movable lateral walls adapted to define belt-grippers and a movable front supporting plate;
- means for opening the ground, comprising a ploughshare, adapted to produce a flat-bottomed furrow into which to set down said sods;
- pick-up and set-down means, adapted to pick up a single sod from the feed belt in a gripping position and to set it down in said furrow in a release position;
- a movement system for said pick-up and set-down means, adapted to determine their respective working trajectory,
wherein said electronic control unit comprises a program adapted to detect and control the movement of said feed belt and of said pick-up and set-down means.

Said pick-up and set-down means comprise a first pickup system disposed to pick up the sods individually from said feed belt and take them to an intermediate position; retaining means disposed to temporarily keep the sods in said intermediate position; a second pickup system disposed to pick up the sods from said intermediate position and take them into said flat-bottomed furrow in the ground.

The movement of the second pickup system, which translates rotational component between the intermediate position and the actual transplanting position in the furrow, allows to release the sod in a perfect vertical arrangement and at a speed which is also substantially vertical.

The object of the invention is to overcome these limits, and in particular:
- to improve the precision with which the sods are positioned in the open furrow in the ground, preventing the seedlings from toppling forward;
- to obtain perfect verticality and adhesion to the ground;
- to make it possible also to operate on wet ground, avoiding the problems mentioned above linked to the dimensions of the furrow and to closing of the open furrow;
- to allow faster placing, increasing the hourly productivity of the transplanter machine.

The objects are achieved with an improved transplanter machine for seedlings rooted in sods, comprising:
- a perimeter frame;
- means for resting and advancing on the ground;
- at least one distribution and placing line for said sods;
- an electronic control unit,
wherein said at least one distribution and placing line comprises:
- a secondary frame;
- a feed belt, having a main direction of longitudinal extension, to feed a column of sods in blocks, the base of which is adapted to rest on said belt;
- retaining means, adapted to temporarily block said column of sods along said feed belt, comprising movable lateral walls adapted to define belt-grippers;
- means for opening the ground, comprising a ploughshare, adapted to produce a flat-bottomed furrow in the ground into which to set down said sods;
- pick-up and set-down means, adapted to pick up a single sod from the feed belt in a gripping position and to set it down in said furrow in the ground in a release position;
- a movement system for said pick-up and set-down means, adapted to determine their respective working trajectory,
and wherein:
- said electronic control unit comprises a program adapted to detect and control the movement of said feed belt and of said pick-up and set-down means;
- said retaining means further comprise a movable front supporting plate,
- said pick-up and set-down means comprise a working gripper having a gripping point;
characterised in that
- said movement system comprises a plurality of rods kinematically connected to one another and to the secondary frame of said at least one distribution and placing line to form a structure comprising a first and a second articulated quadrilateral, wherein said structure is adapted to impart to said working gripper an alternated roto-translation movement, so that its gripping point travels along a trajectory defined by the connecting rod points of the second articulated quadrilateral, comprised between two end positions coinciding respectively with the initial gripping position and the final release position of said sod in the ground, wherein said trajectory defined by the connecting rod points, in said two end positions is tangent respectively to said feed belt in initial gripping position and to the bottom of said furrow in final release position in the ground.

Further characteristics of the invention are contained in the dependent claims.

The improved transplanter machine according to the invention has numerous advantages.

The main advantage consists in correct positioning of the sods, regardless of the length of the leaves of the seedling, ensuring good transplant speed outputs, with a ploughshare of smaller width, with respect to prior art machines, as a result of the movement system of the pick-up and set-down means of the sods and of the particular double articulated quadrilateral structure with which the working gripper is associated, which sets them down one by one directly in the furrow with perfect verticality, always ensuring adhesion of the base of the sods in blocks to the flat bottom of the furrow and consequently improving rooting, regardless of the size and shape of the leaves of the seedling.

The trajectory defined by the connecting rod points executed by the gripping point of the working gripper allows release of the seedling, traveling a length such as to ensure a perfectly vertical orientation at the point of release, and the motion of the gripping point along this trajectory is such as to allow the sod to be set down with a speed substantially the same as the speed of advance of the transplanter machine on the ground, without being subjected to inertial forces, preventing overturning of the sod, to the advantage of correct positioning of the same seedling.

The movement of the sod that, as a result of the double articulated quadrilateral structure, can take place by means of said working gripper alone, without the need to use rotors as is the case in conventional machines, considerably reduces the footprints of the pick-up and set-down means, and of the distribution and placing line, therefore allowing much narrower furrows to be opened.

Advantageously, if the spacings between rows required are particularly close, unlike prior art solutions, it will be possible to work in narrower furrows, allowing the soil removed to be easily discharged and the furrow to be closed with extreme ease.

Even more advantageously, with a reduced footprint, it is also possible to work on wet and damp ground without the risk of sinking and without particular difficulty, it being possible to use the machine even in very wet geographical areas with critical climate conditions.

The transplanter machine further comprises several proximity sensors and encoders, the data detected by which are managed by said control unit, to advantageously ensure perfect coordination of the various kinematic mechanisms of each distribution and placing line, also as a function of advance of the machine and of the set-down distance on the ground between plants.

These and other features and advantages of the invention will be more evident from the more detailed description set forth below, with the aid of the drawings, which show a preferred implementation thereof, illustrated by way of non-limiting example, wherein:
Fig. 1 illustrates, in an axonometric view partly without protective casing, an improved transplanter machine for seedlings rooted in sods according to the invention;
Fig. 2 illustrates, in an axonometric view, a single distribution and placing line of the transplanter machine according to the invention;
Fig. 3 illustrates, in partial longitudinal section, the distribution and placing line of Fig. 2;
Figs. 4 and 5 illustrate, in a side view from a first side, a portion of the distribution line of Fig. 2, in two positions of the working gripper, respectively in gripping position and in release position;
Figs. 6 and 7 illustrate, in a side view from the other side, a portion of the distribution line of Fig. 2, again with the working gripper in the two gripping and release positions;
Figs. 8 and 9 illustrate, in schematic view, the kinematic model of a distribution and placing line according to the invention, respectively in an intermediate working position, and in the two - superimposed - gripping (continuous line) and release (dashed line) end positions.

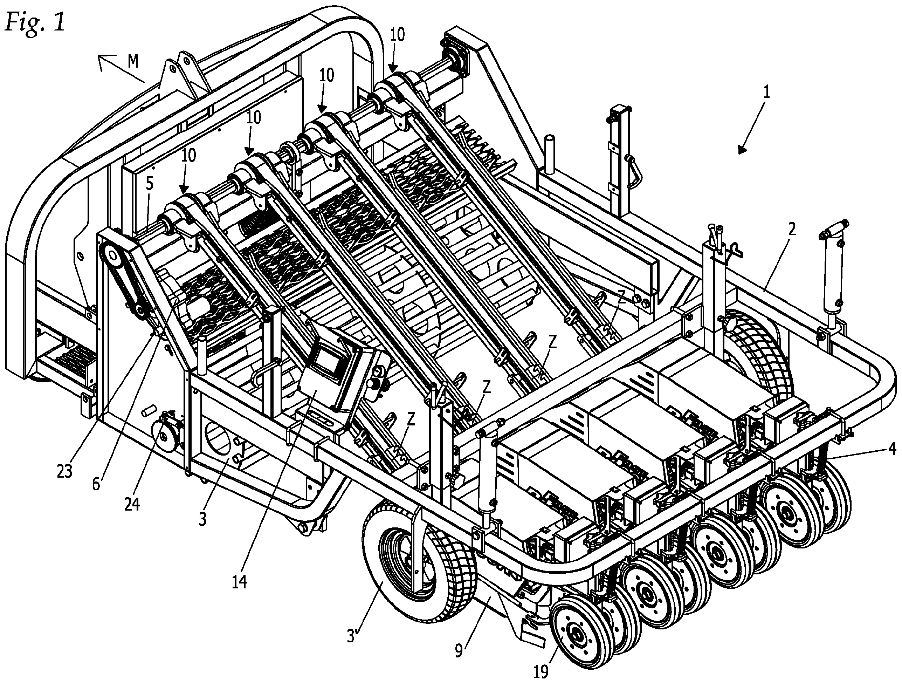

With reference to Fig. 1, there is illustrated a transplanter machine 1 for seedlings rooted in sods Z, substantially comprising a perimeter frame 2 provided with wheels 3, 3', which act as means for resting and advancing on the ground in a direction of travel M; a plurality of distribution and placing lines 10 for said sods Z, a control unit 14.

The distribution and placing lines 10 of the sods Z are side by side and aligned with one another, each fixed to the perimeter frame 2 of the machine 1 independently, with interposition of elastic means 4 adapted to offset any unevenness of the ground.

The transplanter machine 1 can be of self-propelled type, provided with its own motor, or have no motor, for use with an agricultural tractor or other towing means.

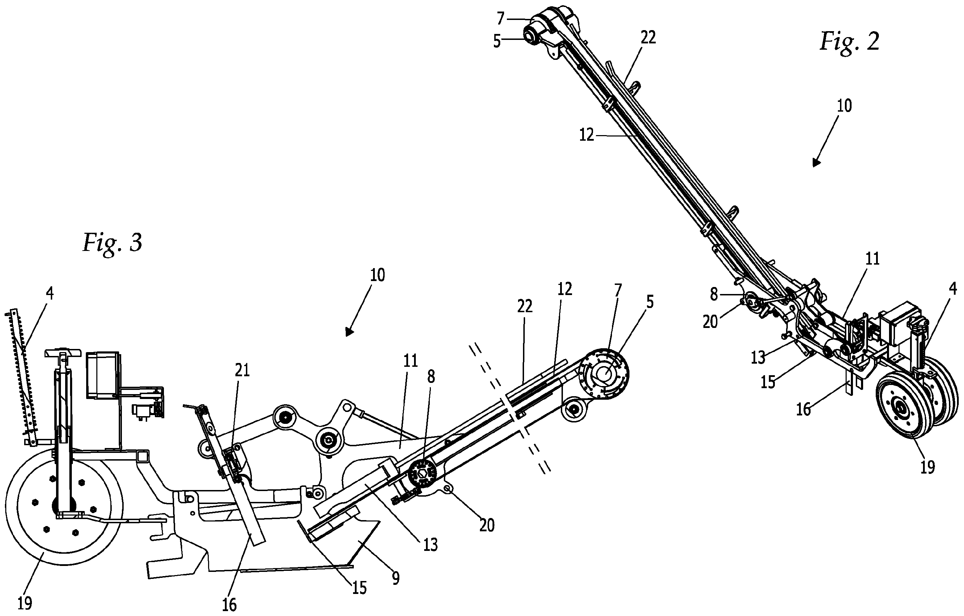

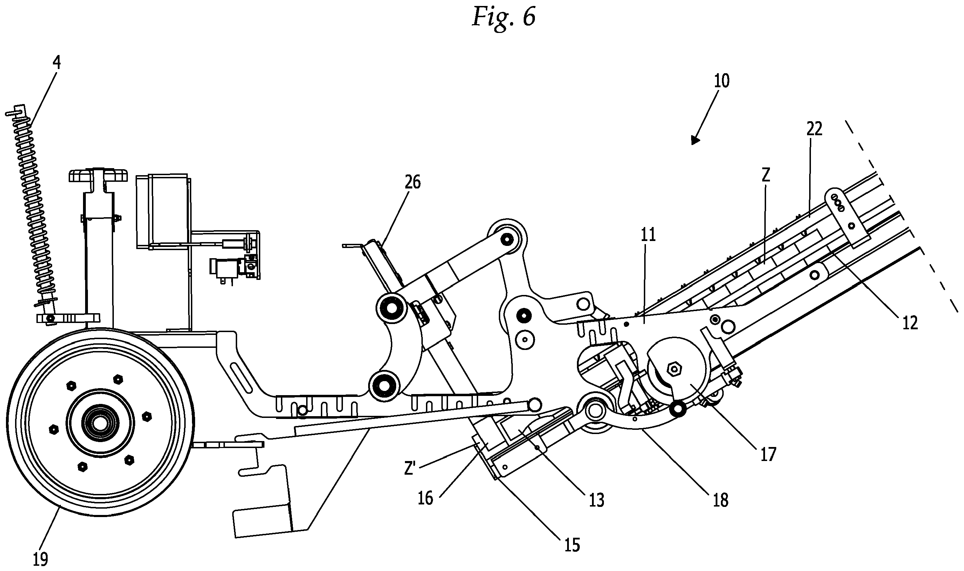

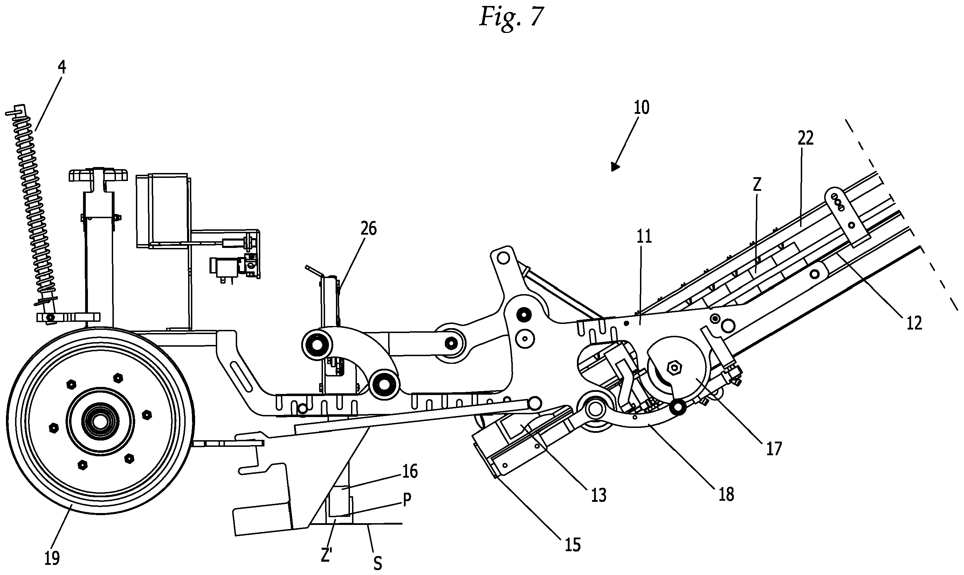

With reference now to Figs. 2-7, there is illustrated a single distribution and placing line 10 of sods Z, produced to operate as modular unit of the transplanter machine 1 of Fig. 1.

Said distribution and placing line 10 essentially comprises:
- a feed belt 12, having a main direction of longitudinal extension x, for a column of sods Z in blocks, the base of which is adapted to rest on said belt 12;
- retaining means, adapted to temporarily block said column of sods Z along said feed belt 12;
- means for opening the ground, adapted to produce a flat-bottomed furrow S into which to set down said sods Z;
- a working gripper 16, having a direction of longitudinal extension y and a gripping point P, adapted to pick up a single sod Z from the feed belt 12 in a gripping position and to set it down in said furrow S in a release position;
- a movement system for said working gripper 16, adapted to determine its working trajectory;
- a secondary frame 11 acting as support for said components of said distribution and placing line 10.

Said feed belt 12 (or synchronized belt) is provided with a smooth surface, facing outward, on which the sods Z rest and a toothed surface, facing inward, acting as synchronous motion transmission means in cooperation with two gear wheels (or of cage type), respectively motorized 7 and idle 8. Said feed belt 12 is loaded manually with columns of sods Z by an operator in charge of the machine 1.

More in detail, retaining walls 22 are provided at the sides of the feed belt 12, in substance to form a sloping channel, oriented facing rearward with respect to the direction of advance M of the transplanter machine 1 and downward.

Said retaining walls 22 comprise, close to the ground, movable side walls, adapted to laterally clamp the column of sods Z along said feed belt 12, producing a belt-gripper 13.

Said belt-gripper 13 extends parallel to the main direction of longitudinal extension of the feed belt 12 and, as a function of its opening or closing, allows the sods Z to advance along it or to be kept stationary, clamping them on the respective lateral faces. The position of said belt-gripper 13 is such as to release the first sod Z' of the row, i.e., the sod closest to the ground, to allow said sod Z' to be picked up by the working gripper 16.

In addition to said belt-gripper 13, the retaining means of the sods Z further comprise a movable front supporting plate 15, a sort of diaphragm, adapted to retain temporarily blocked the first sod Z' of the column transported, before pick-up by said working gripper 16.

Said movable plate 15 is arranged at the outlet of the sloping channel of the feed belt 12 and its movement is adjusted by a cam mechanism 17.

Said belt-gripper 13 and said working gripper 16 are connected to a pneumatic drive circuit and the gripping step is implemented respectively by means of actuators 25, 26 operated by pneumatic valves controlled by said electronic control unit 14.

Said means for opening the ground comprise a ploughshare 9 and wheels 19 for closing the furrow, or equivalent means (e.g. blades for earthing up), which act with the advance of the machine 1 in the direction of travel M. Said ploughshare 9 forms a substantially flat bottomed furrow S in the ground, inside which the sods Z are set down.

As mentioned above, the transplanter machine 1 comprises an electronic control unit 14, residing in which is a program that manages each single distribution and placing line 10, as well as the correct timing of operation of all the distribution and placing lines of the machine, to obtain setting down in rows or in quincunxes.

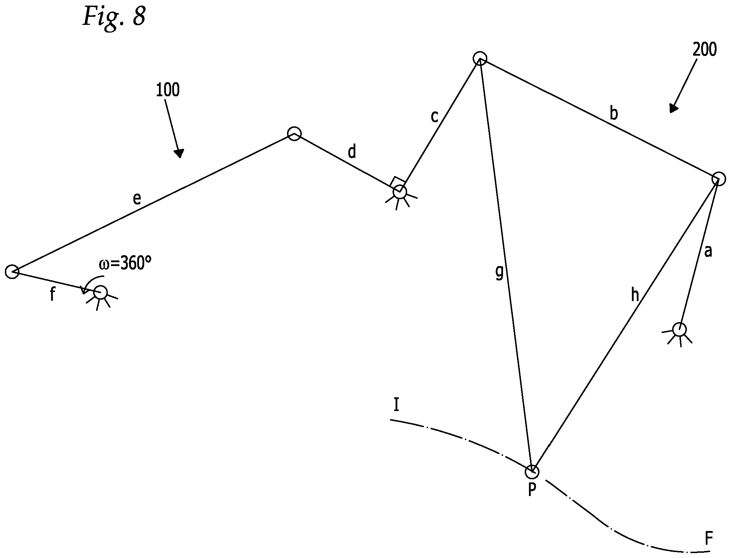

With particular reference to the diagram of Fig. 8, said movement system comprises a plurality of rods a, b, c, d, e, f kinematically connected to one another and to the secondary frame 11 of said at least one distribution and placing line 10 to form a double articulated quadrilateral structure.

A first articulated quadrilateral 100 is composed of the rods f, e, d.

A second articulated quadrilateral 200 is composed of the rods c, b, a.

The two articulated quadrilaterals 100, 200 are interconnected by a rigid body identified by the rods c, d (central crank of the system).

The rigid body defined - virtually - by the rods b, h, g defines the trajectory of the connecting rod points identified by the positions occupied by the point P, i.e., the gripping point of said working gripper 16.

Said structure is adapted to impart to said working gripper 16 an alternated roto-translation movement, i.e., an alternated to-and-fro movement between delivery of the sod Z' from the feed belt 12 and the set-down point of the same sod Z' in the furrow S of the ground.

The movement of the double articulated quadrilateral structure is given by the continuous rotation Ω through 360° of the rod f acting as crank, which, through the connecting rod e, controls the central crank of the system, composed of the two rods d, c. The double central crank of the system c, d allows the alternating motion to the second articulated quadrilateral 200.

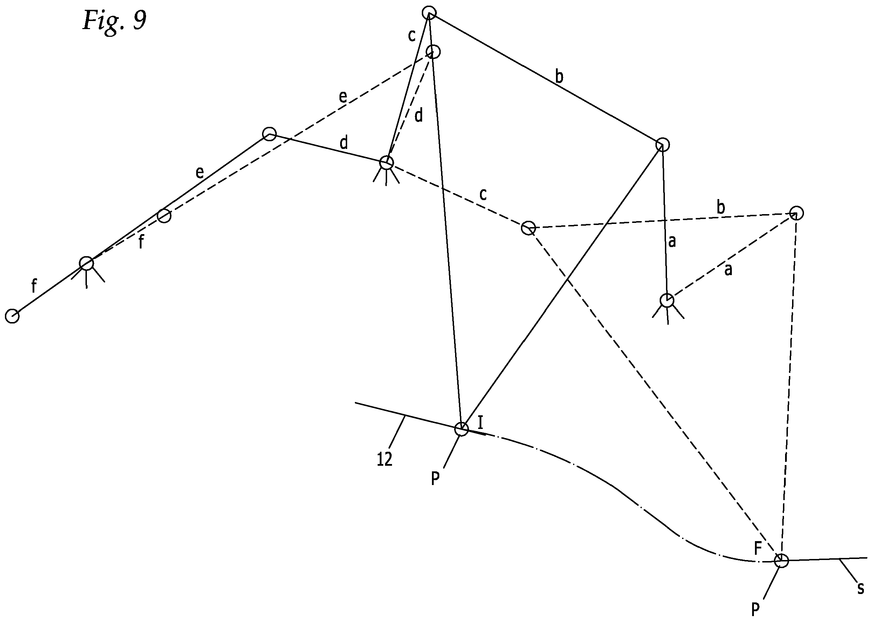

The total movement of said double articulated quadrilateral structure 100, 200, which supports said working gripper 16, causes the gripping point P of said working gripper 16 to draw a trajectory defined by the connecting rod points of said second articulated quadrilateral 200, comprised between the two end positions coincident respectively with the initial gripping position I and the final release position F of said sod Z' (Fig. 9).

Said trajectory, in said two end positions I, F, is tangent respectively to said feed belt 12 and to the bottom of said furrow S.

Advantageously, the direction of longitudinal extension y of said working gripper 16 is substantially orthogonal to the plane of said feed belt 12 and to the plane of the bottom of said furrow S, respectively in the gripping I and release F position of said sod Z'.

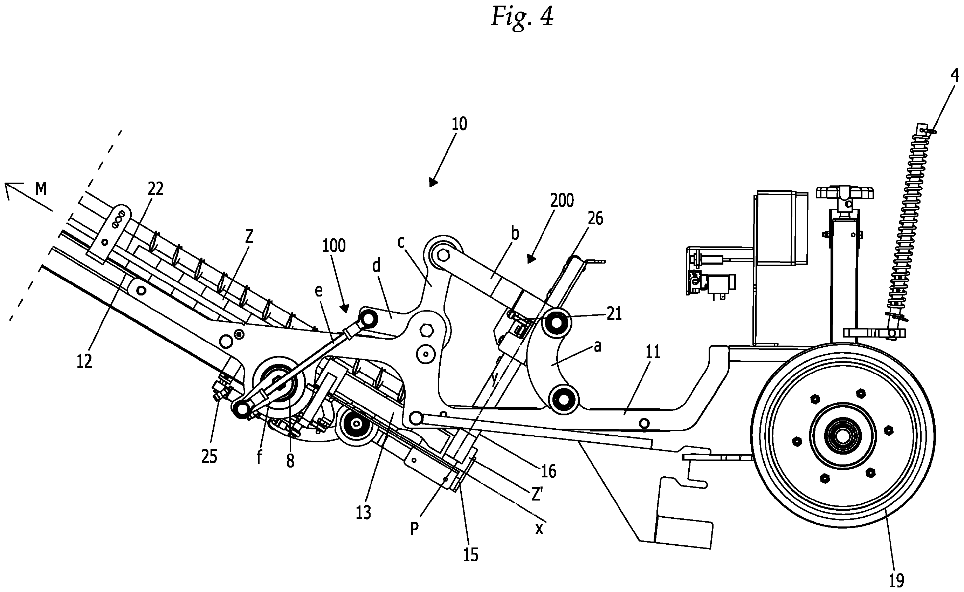

With reference to the side view of Figs. 4-5, the whole double articulated quadrilateral structure 100, 200 is mechanically controlled by an idler gear wheel 8, engaged by the toothed lower face of said feed belt 12. The idler gear wheel 8 carries a crank, corresponding to the rod f, which operates, according to the kinematic relations described above, the double articulated quadrilateral 100, 200 that drives the working gripper 16.

Said toothed feed belt 12 is in turn moved by a drive gear wheel 7 integral with a drive shaft 5, operated by a hydraulic motor 6 associated with the perimeter frame 2 of the machine 1.

Said movable diaphragm 15 is also connected, through a kinematic lever mechanism 18, to the idler gear wheel 8, which operates a cam 17.

Therefore, said idler gear wheel 8 rotates the cam 17 that governs the position of said movable front supporting diaphragm 15.

Said distribution and placing line 10 is advantageously provided with sensors to generate signals that can be processed by the electronic control unit 14 adapted to coordinate operation of the various mechanical members.

In particular, there are provided a first proximity sensor 20 that indicates the passage of the crank f from a reference point (cycle zero) and a second proximity sensor 21 adapted to detect the state of opening of said working gripper 16.

The position of said working gripper 16 along its trajectory is instead monitored indirectly through an encoder 23 that allows measurement of the angle of rotation of the drive shaft 5 on which the drive gear wheel 7 is mounted. Said encoder 23 supplies a signal that can be used by the electronic control unit 14 for control and coordination of the pneumatic actuators 25, 26 of the distribution line 10, in particular of the belt-gripper 13 for retaining the sods Z and for opening the working gripper 16.

Moreover, the transplanter machine 1 comprises a sensor 24 adapted to supply a signal correlated to the distance covered by the machine 1 in the direction of travel M and to its speed, which, for example, consists of a pulse generator encoder connected to the axle of the wheels 3 of the machine 1.

The electronic control unit 14 also comprises a decoding card in which the management software program resides and a numeric control keypad, or equivalent device, for manually setting the working parameters, including the distance.

The program is able to process the pulses emitted by the encoder 24 connected to the axle of the wheels 3 of the machine 1, obtaining a measurement of the distance covered by the advancing machine 1, comparing them with a value set and modifiable by the user. Based on this comparison, the control unit 14 can control the hydraulic motor 6 that operates the drive gear wheel 7, and consequently the toothed belt 12, the idler gear wheel 8 and all the kinematic mechanisms of the distribution and placing line 10.

In reference to operation of a single distribution and placing line 10, it must be stated that a work cycle (i.e., gripping the sod Z', release in the furrow S, return of the working gripper 16 close to the feed belt 12) corresponds to a rotation Ω of 360° of the crank f of the first articulated quadrilateral 100, i.e., a full angle travelled by the idler gear wheel 8, and is detected by said first cycle zero sensor 20.

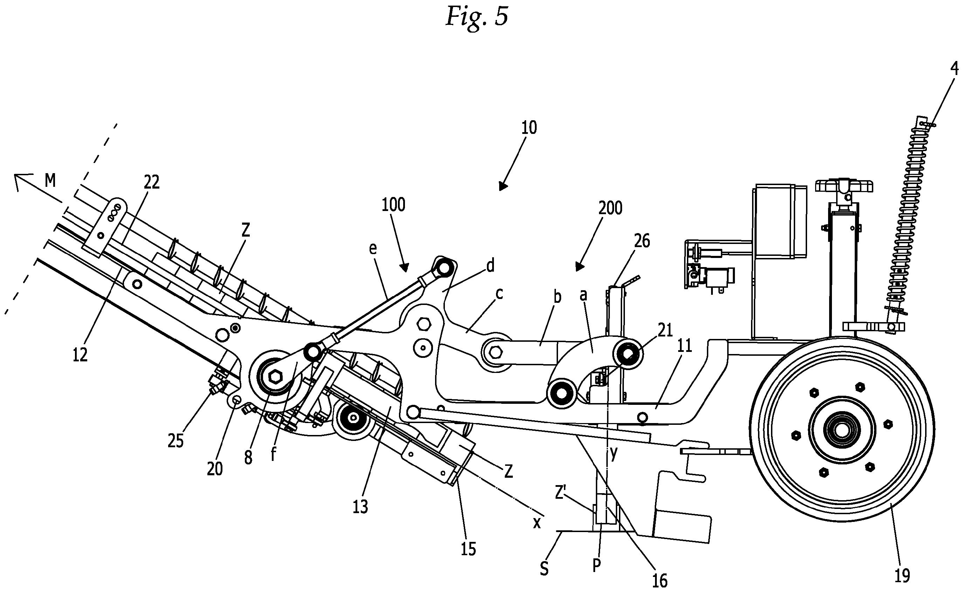

Operation of a single distribution line 10 is as follows, described with the aid of Figs. 4 and 5.

Fig. 4 shows a column of sods Z, and related seedling, gripped in the belt-gripper 13, while a single sod Z', placed close to the movable stop diaphragm 15, is ready to be grasped by said working gripper 16.

Fig. 5 shows the sod Z' in the release position in the furrow S, where the movement speed of said sod Z' is substantially equal to the speed of advance in the direction of travel M of said transplanter machine 1.

As a function of the various pulses generated by the encoder 23 connected to the drive shaft 5 on which the drive gear wheel 7 is mounted, of the cycle zero pulse generated by the first sensor 20 and of the pulse generated by the second proximity sensor 21 that signals opening of the working gripper 16, for each complete rotation through 360° of the crank f, the following operating steps can be defined, comprised between two reference values V:
1) V0 - V1: movable diaphragm 15 in upper resting position, belt-gripper 13 open to allow descent of the column of sods Z onto the belt 12, working gripper 16 open with gripping point P close to the belt 12;
2) V1 - V2: the belt-gripper 13 closes to block the sods Z along the belt, the working gripper 16 closes on the sod Z' to be picked, the movable diaphragm 15 moves to the lower position (Fig. 4) adjusted by the cam profile 17;
3) V2 - V3: tearing of the sod Z', starting of the working gripper 16 and execution of the trajectory defined by the connecting rod points of the second articulated quadrilateral 200 by means of the working gripper 16, with movement of the sod Z' from the gripping position I to the release position F in the furrow S (Fig. 5); opening of the working gripper 16 through the actuator 26 activated by the control unit 14, suitably in advance with respect to the release position F, and in any case managed by the software residing in the same control unit;
4) V3 - V0: return of the working gripper 16, in open configuration, close to the feed belt 12.

At the end of the trajectory, i.e., in the final end release position F, there is managed at software level advance opening of the working gripper 16 proportional to the speed of advance of the machine 1 and to the number of plants/hour to be transplanted, and to the opening speed of the working gripper 16 detected by the second proximity sensor 21 associated with the same gripper.

Passage of the crank f from the cycle zero reference point detected by the proximity sensor 20 determines the start of a new work cycle, the control parameters of which are recalculated and modified based on the result of the preceding cycle. In this way, it is possible to minimize the "sum" effect of possible errors determined by the variation of speed of the machine, of rotation of the drive shaft and of opening of the working gripper caused by wear, state of cleanliness and particular weather conditions of use.

## Claims

1. An improved transplanter machine (1) for seedlings rooted in sods (Z, Z'), comprising:
- a perimeter frame (2);
- means for resting and advancing on the ground (3, 3') in a direction of travel (M);
- at least one distribution and placing line (10) for said sods (Z, Z');
- an electronic control unit (14);
wherein said at least one distribution and placing line (10) comprises:
- a secondary frame (11);
- a feed belt (12), having a main direction of longitudinal extension (x), to feed a column of sods (Z) in blocks, the base of which is adapted to rest on said belt (12);
- retaining means, adapted to temporarily block said column of sods (Z) along said feed belt (12), comprising movable lateral walls adapted to define belt-grippers (13);
- means for opening the ground, comprising a ploughshare (9), adapted to produce a flat-bottomed furrow (S) in the ground into which to set down said sods;
- pick-up and set-down means, adapted to pick up a single sod (Z') from the feed belt (12) in a gripping position (I) and to set it down in said furrow in the ground in a release position (F);
- a movement system for said pick-up and set-down means, adapted to determine their respective working trajectory,
and wherein:
- said electronic control unit (14) comprises a program adapted to detect and control the movement of said feed belt (12) and of said pick-up and set-down means;
- said retaining means further comprise a movable front supporting plate (15),
- said pick-up and set-down means comprise a working gripper (16) having a gripping point (P);
**characterised in that**
- said movement system comprises a plurality of rods (a, b, c, d, e, f) kinematically connected to one another and to the secondary frame (11) of said at least one distribution and placing line (10) to form a structure comprising a first (100) and a second (200) articulated quadrilateral, wherein said structure is adapted to impart to said working gripper (16) an alternated roto-translation movement, so that its gripping point (P) travels along a trajectory defined by the connecting rod points of the second articulated quadrilateral (200), comprised between two end positions coinciding respectively with the initial gripping position (I) and the final release position (F) of said sod (Z') in the ground, wherein said trajectory defined by the connecting rod points, in said two end positions (I, F) is tangent respectively to said feed belt (12) in initial gripping position (I) and to the bottom (S) of said furrow in final release position (F) in the ground.

2. The transplanter machine (1) according to claim 1, **characterized in that**, in said final release position (F), the movement speed of said sod (Z') is substantially equal to the speed of advance in the direction of travel (M) of said transplanter machine (1).

3. The transplanter machine (1) according to claim 1 or 2, **characterized in that** said working gripper (16) comprises a direction of longitudinal extension (y) that is substantially orthogonal to the plane of said feed belt (12) and to the plane of the bottom of said furrow (S), respectively in the initial gripping position (I) and in the final release position (F) of said sod (Z').

4. The transplanter machine (1) according to claim 1, **characterized in that** it comprises a pneumatic drive circuit, adapted to govern said belt-gripper (13) and said working gripper (16) through respective actuators (25, 26), controlled by said control unit (14).

5. The transplanter machine (1) according to claim 1, **characterized in that** each distribution and placing line (10) comprises a cam mechanism (17), adapted to adjust the movement of said movable front supporting plate (15).

6. The transplanter machine (1) according to claim 1, **characterized in that** said feed belt (12) comprises a toothed lower face and said movement system for said pick-up and set-down means comprises an idler gear wheel (8) engaged by said toothed lower face of said feed belt (12), adapted to mechanically control said double articulated quadrilateral structure (100, 200) in a synchronous manner.

7. The transplanter machine (1) according to claims 5 and 6, **characterized in that** said cam mechanism (17) is mechanically controlled by said idler gear wheel (8).

8. The transplanter machine (1) according to claim 6, **characterized in that** it comprises a drive shaft (5) on which there is fixed a drive gear wheel (7) of said at least one distribution and placing line (10) adapted to engage said toothed lower face of said feed belt (12).

9. The transplanter machine (1) according to claim 6, **characterized in that** it comprises a first proximity sensor (20), mounted in the vicinity of said idler gear wheel (8), to detect the end of each working cycle of said double articulated quadrilateral structure (100, 200).

10. The transplanter machine (1) according to claim 1, **characterized in that** it comprises a second proximity sensor (21), associated with said working gripper (16), adapted to detect the state of opening thereof.

11. The transplanter machine (1) according to claim 8, **characterized in that** it comprises an encoder (23) adapted to measure the rotation angle of said drive shaft (5) on which there is fixed said drive gear wheel (7).

12. The transplanter machine (1) according to claim 1, **characterized in that** it comprises an encoder (24), connected to the resting and advancing means (3) of the machine on the ground, adapted to supply a signal that can be correlated to the distance travelled by said machine (1) and to its speed.

13. The transplanter machine (1) according to at least one of the preceding claims, **characterized in that** said electronic control unit (14) comprises a decoding card capable of detecting the signals emitted by the sensors (20, 21, 23, 24) and of defining the parameters to be used to govern operation of the at least one distribution and placing line (10), recalibrating them at each working cycle of the same line.

## Patentansprüche

1. Eine verbesserte Pflanzmaschine (1) für in Grasnarben (Z, Z') verwurzelte Setzlinge, umfassend:
- einen umlaufenden Rahmen (2);
- Mittel, um auf dem Boden (3, 3') in Fahrtrichtung (M) stillzustehen oder vorzurücken;
- mindestens eine Verteilungs- und Platzierlinie (10) für besagte Grasnarben (Z, Z');
- eine elektronische Steuereinheit (14);
wobei besagte mindestens eine Verteilungs- und Platzierlinie (10) Folgendes umfasst:
- einen sekundären Rahmen (11);
- ein Einlaufband (12), das eine Hauptrichtung der Längsausdehnung (x) aufweist, um eine Reihe von Grasnarben (Z) blockweise einzuspeisen, deren Basis geeignet ist, um auf besagtem Band (12) zu ruhen;
- Haltemittel, geeignet, um besagte Reihe von Grasnarben (Z) längs des besagten Einlaufbandes (12) zeitweise zu blockieren, umfassend mobile Seitenwände, geeignet, um Bandgreifer (13) zu definieren;
- Mittel, um den Boden zu öffnen, umfassend eine Pflugschar (9), geeignet, um eine abgeflachte Furche (S) im Boden zu erzeugen, in die besagte Grasnarben abzusetzen sind;
- ein Aufgreif- und Absetzmittel, geeignet, um eine einzelne Grasnarbe (Z') vom Einlaufband (12) in einer Greifposition (I) aufzugreifen und in die besagte Furche im Boden in einer Freigabeposition (F) abzusetzen;
- ein Bewegungssystem für besagte Aufgreif- und Absetzmittel, geeignet, um ihre jeweilige Arbeitsbahn festzulegen,
und wobei:
- besagte elektronische Steuereinheit (14) ein Programm umfasst, geeignet, um die Bewegung des besagten Einlaufbandes (12) und der besagten Aufgreif- und Absetzmittel zu erkennen und zu steuern;
- besagte Haltemittel weiterhin eine mobile vordere Trägerplatte (15) umfassen,
- besagte Aufgreif- und Absetzmittel einen Arbeitsgreifer (16) mit einem Greifpunkt (P) umfassen;
**dadurch gekennzeichnet, dass**
- besagtes Bewegungssystem eine Vielzahl von Stangen (a, b, c, d, e, f) umfasst, die kinematisch miteinander und mit dem sekundären Rahmen (11) der besagten mindestens einen Verteilungs- und Platzierlinie (10) verbunden sind, um eine Struktur zu bilden, die ein erstes (100) und ein zweites (200) bewegliches Viereck umfasst, wobei besagte Struktur geeignet ist, um dem besagten Arbeitsgreifer (16) eine abwechselnde Rototranslationsbewegung zu vermitteln, so dass der Greifpunkt (P) längs einer Bahn verläuft, definiert durch die Verbindungsstangenpunkte des zweiten beweglichen Vierecks (200), das zwischen zwei Endpositionen umfasst ist, die jeweils mit der anfänglichen Greifposition (I) und der endgültigen Freigabeposition (F) der besagten Grasnarbe (Z') auf dem Boden zusammenfallen, wobei besagte Bahn, die durch die Verbindungsstangenpunkte definiert wird, in den besagten zwei Endpositionen (I, F) jeweils das besagte Einlaufband (12) in der anfänglichen Greifposition (I) und den unteren Rand (S) der besagten Furche in der endgültigen Freigabeposition (F) am Boden berührt.

2. Die Pflanzmaschine (1) gemäß Anspruch 1, **dadurch gekennzeichnet dass** bei der besagten endgültigen Freigabeposition (F) die Bewegungsgeschwindigkeit der besagten Grasnarbe (Z') im Wesentlichen gleich der Fahrgeschwindigkeit in Fahrtrichtung (M) der besagten Pflanzmaschine (1) ist.

3. Die Pflanzmaschine (1) gemäß Anspruch 1 oder 2 **dadurch gekennzeichnet, dass** besagter Arbeitsgreifer (16) eine Richtung der Längsausdehnung (y) umfasst, die im Wesentlichen orthogonal ist zur Ebene des besagten Einlaufbandes (12) und zur Ebene des unteren Randes der besagten Furche (S) in der anfänglichen Greifposition (I), beziehungsweise in der endgültigen Freigabeposition (F) der besagten Grasnarbe (Z').

4. Die Pflanzmaschine (1) gemäß Anspruch 1 **dadurch gekennzeichnet, dass** sie einen pneumatischen Antriebskreis umfasst, geeignet, um besagten Bandgreifer (13) und besagten Arbeitsgreifer (16) durch diesbezügliche Aktuatoren (25, 26) zu steuern, die von besagter Steuereinheit (14) gesteuert werden.

5. Die Pflanzmaschine (1) gemäß Anspruch 1 **dadurch gekennzeichnet, dass** jede Verteilungs- und Platzierlinie (10) ein Kurvengetriebe (17) umfasst, geeignet, um die Bewegung der besagten mobilen vorderen Trägerplatte (15) einzustellen.

6. Die Pflanzmaschine (1) gemäß Anspruch 1 **dadurch gekennzeichnet, dass** besagtes Einlaufband (12) eine gezackte untere Fläche umfasst und besagtes Bewegungssystem für besagtes Aufgreif- und Absetzmittel ein Zwischengetrieberad (8) umfasst, das durch besagte gezackte untere Fläche des besagten Einlaufbandes (12) in Anspruch genommen wird, geeignet, um besagte doppelt bewegliche vierseitige Struktur (100, 200) synchron mechanisch zu steuern.

7. Die Pflanzmaschine (1) gemäß Anspruch 5 und 6 **dadurch gekennzeichnet, dass** besagtes Kurvengetriebe (17) durch besagtes Zwischengetrieberad (8) mechanisch gesteuert wird.

8. Die Pflanzmaschine (1) gemäß Anspruch 6, **dadurch gekennzeichnet dass** sie eine Antriebswelle (5) umfasst, auf der ein Antriebszahnrad (7) der besagten mindestens einen Verteilungs- und Platzierlinie (10) befestigt ist, geeignet, um die besagte gezackte untere Fläche des besagten Einlaufbandes (12) in Anspruch zu nehmen.

9. Die Pflanzmaschine (1) gemäß Anspruch 6 **dadurch gekennzeichnet, dass** sie einen ersten Näherungssensor (20) umfasst, der in der Nähe des besagten Zwischengetrieberades (8) montiert ist, um das Ende eines jeden Arbeitszyklus der besagten doppelt beweglichen vierseitigen Struktur (100, 200) festzustellen.

10. Die Pflanzmaschine (1) gemäß Anspruch 1 **dadurch gekennzeichnet, dass** sie einen zweiten Näherungssensor (21) umfasst, der dem besagten Arbeitsgreifer (16) zugeordnet ist, geeignet, um den Zustand der Öffnung von diesem festzustellen.

11. Die Pflanzmaschine (1) gemäß Anspruch 8 **dadurch gekennzeichnet, dass** sie einen Encoder (23) umfasst, geeignet, um den Rotationswinkel der besagten Antriebswelle (5) zu messen, auf der besagtes Antriebszahnrad (7) befestigt ist.

12. Die Pflanzmaschine (1) gemäß Anspruch 1 **dadurch gekennzeichnet, dass** sie einen Encoder (24) umfasst, der mit den besagten Stillstand- und Vorrückmitteln (3) der Maschine auf dem Boden verbunden ist, geeignet, um ein Signal bereitzustellen, das in Beziehung gesetzt werden kann zu der Entfernung, die von besagter Maschine (1) zurückgelegt wurde und zu ihrer Geschwindigkeit.

13. Die Pflanzmaschine (1) gemäß mindestens einem der vorhergehenden Ansprüche **dadurch gekennzeichnet, dass** besagte elektronische Steuereinheit (14) eine Decoderkarte umfasst, im Stande, die von den Sensoren (20, 21, 23, 24) ausgegebenen Signale festzustellen und die Parameter, die gebraucht werden, um den Betrieb von mindestens einer Verteilungs- und Platzierlinie (10) zu regeln und sie bei jedem Arbeitszyklus der gleichen Linie neu festzusetzen, zu definieren.

## Revendications

1. Une machine à transplanter améliorée (1) pour plantules enracinées en mottes (Z, Z'), comprenant :
- un cadre périphérique (2) ;
- des moyens pour reposer et avancer sur le sol (3, 3') dans une direction de déplacement (M);
- au moins une ligne de distribution et placement (10) pour lesdites mottes (Z, Z') ;
- une unité de commande électronique (14) ;
où ladite ligne de distribution et placement (10) au minimum comprend :
- un cadre secondaire (11) ;
- une bande d'alimentation (12), ayant une direction principale d'extension longitudinale (x), pour alimenter une colonne de mottes (Z) en blocs, la base desquels étant adaptée pour reposer sur ladite bande (12) ;
- des moyens de retenue, adaptés pour bloquer temporairement ladite colonne de mottes (Z) le long de ladite bande d'alimentation (12), comprenant des parois latérales mobiles adaptées pour définir des pinces de bande (13) ;
- des moyens pour ouvrir le terrain, comprenant un soc de charrue (9), adaptés pour produire un sillon à fond plat (S) dans lequel déposer lesdites mottes ;
- des moyens de prélèvement et de disposition, adaptés pour prélever une motte individuelle (Z') depuis la bande d'alimentation (12) dans une position de préhension (I) et la déposer dans ledit sillon dans une position de libération (F) ;
- un système de mouvement pour lesdits moyens de prélèvement et disposition, adapté pour déterminer leur trajectoire de travail respective,
et où :
- ladite unité de commande électronique (14) comprend un programme adapté pour détecter et contrôler le mouvement de ladite bande d'alimentation (12) et desdits moyens de prélèvement et disposition ;
- lesdits moyens de retenue comprennent également une plaque de support avant mobile (15) ;
- lesdits moyens de prélèvement et disposition comprennent une pince de travail (16) ayant un point de préhension (P) ;
**caractérisée par le fait que**
- ledit système de mouvement comprend une multitude de tiges (a, b, c, d, e, f) connectée de manière cinématique les unes aux autres et au cadre secondaire (11) de ladite ligne de distribution et placement (10) au minimum pour former une structure comprenant un premier (100) et un second (200) quadrilatère articulé, où ladite structure est adapté pour imprimer à ladite pince de travail (16) un mouvement de roto-translation alterné, de sorte que son point de préhension (P) se déplace le long d'une trajectoire définie par les points de connexion des tiges du second quadrilatère articulé (200), compris entre deux positions finales qui coïncident respectivement avec la position de préhension initiale (I) et la position de libération finale (F) de ladite motte (Z') dans le terrain, où ladite trajectoire définie par les points de connexion des tiges, dans lesdites deux positions finales (I, F) est tangente par rapport à ladite bande d'alimentation (12) dans la position de préhension initiale (I) et au fond (S) dudit sillon dans la position de libération finale (F) dans le terrain.

2. La machine à transplanter (1) selon la revendication 1, **caractérisée par le fait que**, dans ladite position de libération finale (F), la vitesse de mouvement de ladite motte (Z') est substantiellement égale à la vitesse d'avance dans la direction de déplacement (M) de ladite machine à transplanter (1).

3. La machine à transplanter (1) selon la revendication 1 ou 2, **caractérisée par le fait que** la pince de travail (16) comprend une direction d'extension longitudinale (y) qui est substantiellement perpendiculaire au plan de ladite bande d'alimentation (12) et au plan du fond dudit sillon (S), respectivement dans la position de préhension initiale (I) et dans la position de libération finale (F) de ladite motte (Z').

4. La machine à transplanter (1) selon la revendication 1, **caractérisée par le fait qu'**elle comprend un circuit d'entraînement, adapté pour gouverner ladite pince de bande (13) et ladite pince de travail (16) par le biais d'actionneurs respectifs (25, 26), contrôlé par ladite unité de commande (14).

5. La machine à transplanter (1) selon la revendication 1, **caractérisée par le fait que** chaque ligne de distribution et positionnement (10) comprend un mécanisme à came (17), adapté pour ajuster le mouvement de ladite plaque de support avant mobile (15).

6. La machine à transplanter (1) selon la revendication 1, **caractérisée par le fait que** ladite bande d'alimentation (12) comprend une face inférieure dentée et que ledit système de mouvement pour lesdits moyens de prélèvement et disposition comprend une roue dentée libre (8) engagée par ladite face inférieure dentée de ladite bande d'alimentation (12), adaptée pour contrôler mécaniquement ladite structure à double quadrilatère articulé (100, 200) de manière synchrone.

7. La machine à transplanter (1) selon les revendications 5 et 6, **caractérisée par le fait que** ledit mécanisme à came (17) est contrôlé mécaniquement par ladite roue dentée libre (8).

8. La machine à transplanter (1) selon la revendication 6, **caractérisée par le fait qu'**elle comprend un arbre d'entraînement (5) sur lequel est fixée une roue dentée d'entraînement (7) de ladite ligne de distribution et disposition (10) au minimum, adaptée pour engager ladite face inférieure dentée de ladite bande d'alimentation (12).

9. La machine à transplanter (1) selon la revendication 6, **caractérisée par le fait qu'**elle comprend un premier capteur de proximité (20), monté proche de ladite roue dentée libre (8), pour détecter la fin de chaque cycle de travail de ladite structure à double quadrilatère articulé (100, 200).

10. La machine à transplanter (1) selon la revendication 1, **caractérisée par le fait qu'**elle comprend un second capteur de proximité (21), associé à ladite pince de travail (16), adapté pour détecter l'état d'ouverture de celle-ci.

11. La machine à transplanter (1) selon la revendication 8, **caractérisée par le fait qu'**elle comprend un codeur (23) adapté pour mesurer l'angle de rotation dudit arbre d'entraînement (5) sur lequel est fixé ladite roue dentée d'entraînement (7).

12. La machine à transplanter (1) selon la revendication 1, **caractérisée par le fait qu'**elle comprend un codeur (24), connecté aux moyens de repos et d'avance (3) de la machine sur le terrain, adapté pour fournir un signal qui peut être corrélé à la distance parcourue par ladite machine (1) et à sa vitesse.

13. La machine à transplanter (1) selon au moins l'une des revendications précédentes, **caractérisée par le fait que** ladite unité de commande électronique (14) comprend une carte de décodage capable de détecter les signaux émis par les capteurs (20, 21, 23, 24) et de définir les paramètres à utiliser pour gouverner le fonctionnement de la ligne de distribution et placement (10) au minimum, en les recalibrant à chaque cycle de travail de cette ligne.
